# DEMANDE DE BREVET EUROPEEN

(11) **EP 0 704 356 A1**
(43) Date de publication de la demande: **03.04.1996**
(21) Numéro de dépôt: 95114964.0
(22) Date de dépôt: 22.09.1995
(51) Int. Cl.: B60S 1/04

(54) **Platine-support pour un dispositif d'essuie-glace**

(30) Priorité: 28.09.1994 FR 9411706
(71) Demandeur: VALEO SYSTEMES D'ESSUYAGE, F-78321 La Verrière (FR)
(72) Inventeur: Lisiecki, Bruno, F-92320 Chatillon (FR)
(74) Mandataire: Gamonal, Didier

(57) **Abrégé**

L'invention propose une platine-support pour un dispositif d'essuie-glace du type comportant un élément tubulaire de structure (10) dont l'extrémité est fixée à un palier moulé (12) de support d'un arbre d'essuie-glace, caractérisée en ce que l'élément tubulaire (10) comporte un tronçon d'extrémité (18) qui est noyé dans le corps (14, 16) du palier (12) et qui comporte des moyens (24, 26) d'immobilisation axiale et en rotation du tronçon d'extrémité (18) par rapport au corps (14, 16) du palier (12).

## Description

La présente invention concerne une platine-support pour un dispositif d'essuie-glace du type comportant un élément tubulaire de structure dont l'extrémité est fixée à un palier moulé de support d'un arbre d'essuie-glace.

Selon une conception connue, l'élément tubulaire allongé de structure est fixé à une plaque-support de la platine par son extrémité libre qui permet d'assurer la fixation axiale et en rotation d'un palier de support pour l'arbre d'entraînement d'un essuie-glace qui est entraîné en mouvement de balayage alternatif par une tringlerie qui relie chaque arbre d'entraînement à des composants d'entraînement appartenant à un mécanisme fixé sur la plaque-support.

Selon la conception connue décrite et représentée dans le document DE-A-2.920.899, le palier comporte un tronçon cylindrique en forme de moignon dans lequel une portion de la paroi en vis-à-vis de l'élément tubulaire de structure est enfoncée par déformation au moyen d'un poinçon de sertissage selon une direction sensiblement perpendiculaire à l'axe du tube.

Cette technique permet d'assurer par sertissage la fixation de l'extrémité de l'élément tubulaire de structure sur le tronçon de palier en forme de moignon cylindrique reçu à l'intérieur de l'extrémité de l'élément tubulaire.

On constate toutefois que cette technique ne permet pas d'assurer de manière fiable une liaison rigide, en translation et en rotation, et l'on constate, en utilisation, l'apparition d'un jeu axial dans la liaison.

Cette technique ne permet pas d'assurer de manière aisée une précision suffisante du positionnement axial et angulaire du palier de support par rapport à l'élément tubulaire de structure lors de l'opération de sertissage.

Par ailleurs, cette technique nécessite de faire appel à un palier de support dont le corps est réalisé par moulage en métal et dont le poids global est donc particulièrement important.

La présente invention a pour but de proposer une nouvelle conception d'une platine-support pour un dispositif d'essuie-glace qui remédie aux inconvénients qui viennent d'être mentionnés.

Dans ce but, l'invention propose une platine-support du type mentionné précédemment, caractérisée en ce que l'élément tubulaire comporte un tronçon d'extrémité qui est noyé dans le corps du palier et qui comporte des moyens d'immobilisation axiale et en rotation du tronçon d'extrémité par rapport au corps de palier.

Selon d'autres caractéristiques de l'invention :
- le tronçon d'extrémité présente un profil de révolution et comporte au moins une gorge radiale et/ou un collet radial d'immobilisation axiale ;
- la surface extérieure du tronçon d'extrémité comporte une série d'empreintes en relief ;
- le corps de palier est surmoulé sur le tronçon d'extrémité ;
- le tronçon d'extrémité est emmanché à force dans un trou complémentaire formé dans le corps de palier ;
- le tronçon d'extrémité est thermosoudé dans un trou complémentaire du corps du palier ;
- le corps du palier est moulé en matière plastique;
- le tronçon d'extrémité est réalisé sous la forme d'un élément rapporté sur l'extrémité libre de l'élément tubulaire ;
- le tronçon d'extrémité est un élément métallique rapporté qui est fixé par soudage sur l'extrémité libre de l'élément tubulaire ;
- le tronçon d'extrémité rapporté comporte une queue de fixation qui est reçue à l'intérieur de l'extrémité libre ouverte de l'élément tubulaire.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section axiale partielle qui illustre de manière schématique un palier de support d'un arbre d'essuie-glace en association avec une partie d'extrémité d'un élément de structure tubulaire et qui sont fixés par l'intermédiaire d'un tronçon d'extrémité rapporté conformément aux enseignements de l'invention ;
- la figure 2 est une vue en perspective éclatée qui illustre la partie d'extrémité de l'élément tubulaire et un tronçon d'extrémité rapporté qui est une variante de réalisation du'tronçon d'extrémité illustré sur la figure 1 ;
- la figure 3 est une vue similaire à celle de la figure 1 incorporant les composants de la figure 2 ;
- la figure 4 est une vue en perspective d'une variante de réalisation de l'invention dans laquelle le tronçon d'extrémité est réalisé venu de matière avec la partie d'extrémité de l'élément de structure tubulaire ; et
- la figure 5 est une vue en section axiale qui illustre une partie du corps du palier de support et la partie d'extrémité de l'élément tubulaire de la figure 4, en position assemblée.

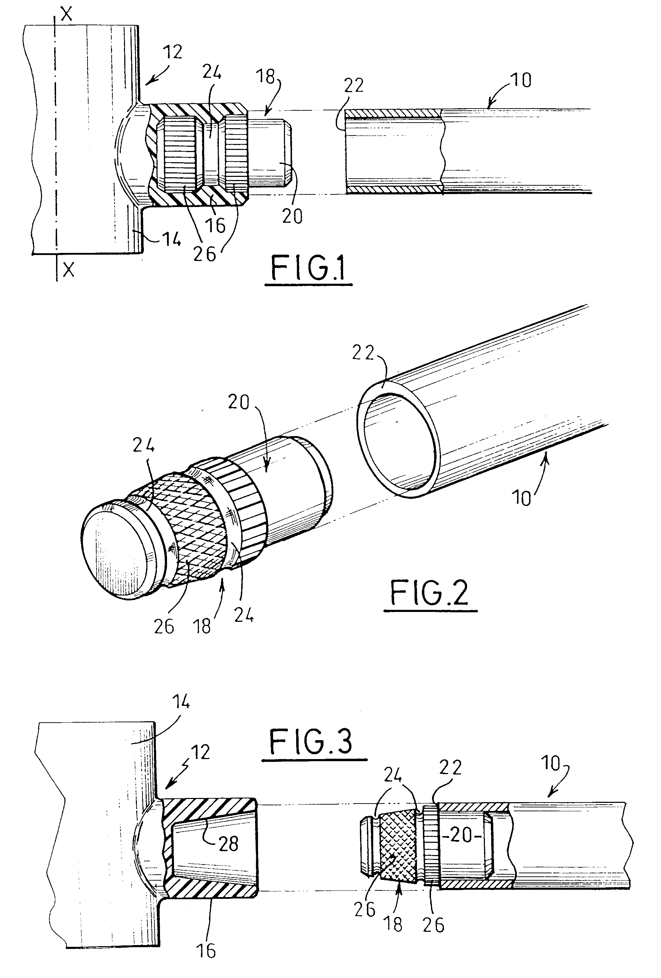

On a représenté sur la figure 1 une partie d'extrémité d'un élément tubulaire allongé 10 qui est un élément de structure appartenant à une platine-support (non représentée) pour un dispositif d'essuie-glace et qui est destiné à être fixé à un palier 12 de support d'un arbre d'entraînement (non représenté) pour un bras d'essuie-glace.

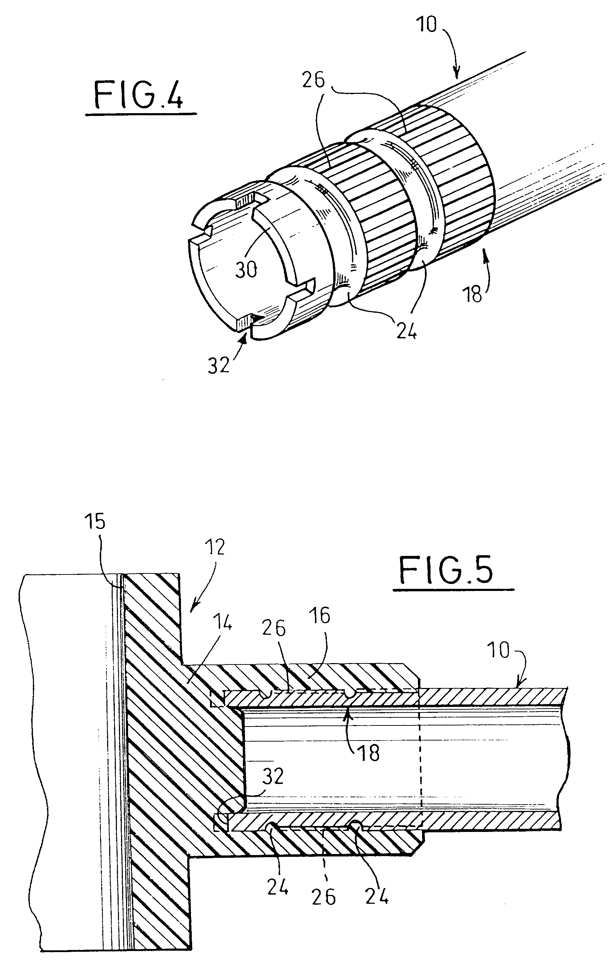

Le corps 14 du palier de support 12 est une pièce moulée en matière plastique qui comporte un alésage principal 15 (voir figure 5) qui reçoit à rotation, directement ou avec interposition de douilles de palier, l'arbre d'entraînement d'un bras d'essuie-glace.

Le corps 14 du palier 12 comporte également un moignon latéral 16 réalisé venu de matière par moulage qui s'étend selon une direction générale perpendiculaire à l'axe X-X de l'alésage principal du palier 12.

Conformément aux enseignements de l'invention, la fixation de la partie d'extrémité de l'élément tubulaire 10 sur le palier 12 est assurée au moyen d'un tronçon d'extrémité 18 qui est noyé dans la matière plastique de moulage du moignon 16 du corps 14 du palier 12.

Dans le mode de réalisation illustré sur la figure 1, le tronçon 18 est réalisé sous la forme d'un élément métallique rapporté sur l'extrémité libre de l'élément tubulaire 10.

A cet effet, le tronçon d'extrémité 18 est réalisé sous la forme d'un insert métallique qui comporte une queue cylindrique 20 de fixation qui est prévu pour être reçue à l'intérieur de l'extrémité libre ouverte 22 de l'élément tubulaire 10.

L'élément tubulaire 10 est un tube métallique et sa fixation sur la queue du tronçon d'extrémité 18 peut être réalisée par exemple par soudage par résistance ou par points.

Afin d'assurer une immobilisation axiale et en rotation de l'élément tubulaire 10 sur le palier 12, le tronçon d'extrémité 18 comporte une gorge radiale 24 et deux séries 26 d'empreintes en relief.

Dans le mode de réalisation illustré sur la figure 1, le moignon 16 du corps 14 du palier 12 est surmoulé sur la partie active, à gauche en considérant la figure 1, du tronçon d'extrémité 18.

Lors du surmoulage, la matière plastique pénètre dans la gorge 24 et dans les empreintes 16 assurant ainsi une liaison intime entre la matière plastique et le tronçon d'extrémité 18 de manière à garantir son immobilisation axiale et en rotation par rapport au corps 14 du palier 12.

La fixation par soudage de l'extrémité libre 22 du tube 10 sur la queue 20 peut être assurée après le surmoulage du corps 14, 16 du palier 12 sur le tronçon d'extrémité 18, comme cela est schématisé sur la figure 1, ou, selon une variante, avant l'opération de surmoulage.

Dans la variante de réalisation illustrée sur la figure 10 sur laquelle des composants identiques ou similaires à ceux de la figure 1 sont désignés par les mêmes chiffres de référence, le tronçon d'extrémité 18 est également réalisé sous la forme d'un insert et il comporte deux gorges radiales 24 pour son immobilisation axiale par rapport au corps 14 du palier 12.

Les empreintes en relief 26 sont réalisées sous la forme de rainures axiales (à droite en considérant la figure 2) ou comme dans le cas de la figure 1 sous la forme d'un molletage (à gauche en considérant la figure 1).

On a schématisé sur la figure 3 le procédé d'assemblage des composants de la figure 2 avec un palier de support.

Dans cet exemple, le tronçon d'extrémité 18 est d'abord fixé par soudage sur l'extrémité libre ouverte de l'élément tubulaire 10 et l'ensemble ainsi constitué est ensuite fixé au palier 12.

Dans cette variante de réalisation, le moignon transversal 16 du corps 14 du support de palier 12 comporte initialement un alésage conique réalisé venu de matière 28 qui présente un profil de révolution légèrement conique comme le profil de la partie active du tronçon d'extrémité 18.

L'assemblage final des composants est réalisé en introduisant le tronçon d'extrémité 18 dans l'alésage 28 puis en assurant un thermosoudage de ces deux composants qui provoque un ramollissement de la matière plastique du moignon 16 autour du tronçon d'extrémité 18 qui, comme dans le cas de la figure 1, provoque la pénétration de la matière plastique dans les gorges 24 et dans les empreintes 26.

Comme dans le cas de la figure 1, et à l'issue des opérations de thermosoudage, la partie active du tronçon d'extrémité 18 est noyée dans la matière plastique.

Dans le mode de réalisation illustré aux figures 4 et 5, le tronçon d'extrémité 18 est réalisé venu de matière à l'extrémité libre de l'élément tubulaire 10.

Outre les gorges radiales 24 et les deux zones comportant des empreintes en relief 26, le tronçon d'extrémité 18 comporte, dans son bord annulaire d'extrémité 30 une série d'encoches 32.

Comme on peut le voir sur la figure 5, et comme dans le cas d'un tronçon d'extrémité 18 réalisé sous la forme d'un élément rapporté, le tronçon d'extrémité 18 est finalement noyé dans le moignon transversal 16 du corps 14 du palier de support 12, suite à une opération de surmoulage ou de thermosoudage.

Les crans 32 augmentent la capacité de retenue en rotation du corps 14 du palier de support 12 sur l'élément tubulaire 10.

Il est également possible, notamment dans le cas de la variante de réalisation illustrée aux figures 4 et 5, d'emmancher à force le tronçon d'extrémité 18 dans un alésage, tel que l'alésage 28 de la figure 3, préalablement réalisé par moulage dans le moignon 16.

Selon ce procédé, l'alésage doit comporter des rainures annulaires en relief qui viennent s'emboîter élastiquement dans les gorges 24 ainsi que des crans en relief qui viennent s'emboîter dans les encoches 32.

Dans ce dernier cas, les encoches 32 peuvent ainsi également servir de moyens d'indexation angulaire de la position du palier de support 12 par rapport à l'élément tubulaire 10.

## Revendications

1. Platine-support pour un dispositif d'essuie-glace du type comportant un élément tubulaire de structure (10) dont l'extrémité est fixée à un palier moulé (12) de support d'un arbre d'essuie-glace, caractérisée en ce que l'élément tubulaire (10) comporte un tronçon d'extrémité (18) qui est noyé dans le corps (14, 16) du palier (12) et qui comporte des moyens (24, 26) d'immobilisation axiale et en rotation du tronçon d'extrémité (18) par rapport au corps (14, 16) du palier (12).

2. Platine-support selon la revendication 1, caractérisée en ce que le tronçon d'extrémité (18) présente un profil de révolution et comporte au moins une gorge radiale (24) et/ou un collet radial d'immobilisation axiale.

3. Platine-support selon la revendication 2, caractérisée en ce que le tronçon d'extrémité (18) comporte une série d'empreintes (26) en relief.

4. Platine-support selon l'une quelconque des revendications précédentes, caractérisée en ce que le corps (14) du palier (12) est surmoulé sur le tronçon d'extrémité (18).

5. Platine-support selon l'une quelconque des revendications 1 à 3, caractérisée en ce que le tronçon d'extrémité (18) est emmanché à force dans un trou complémentaire formé dans le corps (14) du palier (12).

6. Platine-support selon l'une quelconque des revendications 1 à 3, caractérisée en ce que le tronçon d'extrémité (18) est thermosoudé dans un trou complémentaire (28) du corps (14, 16) du palier (12).

7. Platine-support selon l'une quelconque des revendications précédentes, caractérisée en ce que le corps (14, 16) du palier (12) est moulé en matière plastique.

8. Platine-support selon l'une quelconque des revendications précédentes, caractérisée en ce que le tronçon d'extrémité (18) est réalisé sous la forme d'un élément rapporté (18) sur l'extrémité libre de l'élément tubulaire (10).

9. Platine-support selon la revendication 8, caractérisée en ce que le tronçon d'extrémité (18) est un élément métallique fixé par soudage sur l'extrémité libre (22) de l'élément tubulaire (10).

10. Platine-support selon l'une des revendications 8 ou 9, caractérisée en ce que le tronçon d'extrémité rapporté (18) comporte une queue (20) de fixation qui est reçue à l'intérieur de l'extrémité libre ouverte (22) de l'élément tubulaire (10).
